# EUROPEAN PATENT SPECIFICATION

(11) **EP 1 906 621 B1**
(45) Date of publication and mention of the grant of the patent: **01.09.2010**
(21) Application number: 07116102.0
(22) Date of filing: 11.09.2007
(51) Int. Cl.: H04L 29/06

(54) **Session link system, session liaison, liaison manager, session link method and program storage medium storing program thereof**
Sitzungsverbindungssystem, Sitzungsverbindung, Verbindungsmanager, Sitzungsverbindungsverfahren sowie Programmspeichermedium mit darauf gespeichertem Programm dafür
Système de lien de session, liaison de session, gestionnaire de liaison, procédé de lien de session, et support de stockage de programme stockant un programme correspondant

(30) Priority: 25.09.2006 JP 2006258574
(43) Date of publication of application: 02.04.2008
(73) Proprietor: Fujitsu Ltd., Kawasaki-shi, Kanagawa 211-8588 (JP)
(72) Inventor: Horio, Kenichi c/o FUJITSU LIMITED, Kawasaki-shi, Kanagawa 211-8588 (JP); Ohno, Takashi c/o FUJITSU LIMITED, Kawasaki-shi, Kanagawa 211-8588 (JP); Okuyama, Satoshi c/o FUJITSU LIMITED, Kawasaki-shi, Kanagawa 211-8588 (JP)
(74) Representative: Wilding, Frances Ward

(56) References cited:
- EP-A- 1 569 473
- US-A1- 2006 035 656

## Description

### BACKGROUND OF THE INVENTION

### 1. Field of the Invention

The present invention relates to a system for providing a PoC service, and particularly to a method of linking a plurality of PoC sessions.

### 2. Description of the Related Art

A new communication service called PoC (Push-to-Talk over Cellular) has been drawing attention (e.g., Japanese Unexamined Patent Application Publication No. 2005-102033). The PoC is a transceiver-type voice communication service enabling a bidirectional voice communication. Unlike existing telephone services such as VoIP (Voice over Internet Protocol) service, the PoC has a characteristic of enabling simultaneous transmission of voice data to a plurality of receivers (PoC clients) and also enabling the receivers to receive voice data without performing any actions for answering. Due to such a characteristic, the PoC service has been drawing attention in considerably many fields as an easy communication tool among groups. By pushing down a talk button provided to a PoC client, a user obtains permission to talk (talk right) from a PoC server and then talks. The talk right can be acquired by one client at a time from the PoC server. Thus, the PoC clients communicate each other while passing the talk right to one another.

Document US 2006/0036656 discloses a method for merging a plurality of PoC sessions into one large session.

The currently most commonly used form of the PoC includes a form in which a PoC session is held in each of departments or official positions so that a plurality of persons communicate each other within each of the departments (e.g., staff members on the fourth floor) or the official positions. In this case, there is a request for extended multicast in a plurality of departments (e.g., staff members on the fourth floor and staff members on the fifth floor). However, a system fulfilling the request does not exist. To fulfill the request with existing techniques, the sessions held in the respective departments are ended to establish a new session attended by all members of the plurality of departments, in which the extended multicast is performed. Alternatively, an extended multicast session attended by all members of the plurality of departments is prepared on a routine basis, and each of the members attends both PoC sessions, i.e., in his own department session and in the extended multicast session.

### SUMMARY OF THE INVENTION

In the case in which a new session for extended multicast is re-established, establishment of an extended multicast session takes a long time, if a communication environment is not good. That is, establishment of extended multicast communication takes a long time. In the case in which a member attends his own department session as well as in an extended multicast session, a large number of resources are consumed in a network, a server, and so forth. As a result, the load is increased.

It is desirable to effectively achieve extended multicast in a plurality of sessions, i.e., to provide an extended multicast method enabling immediate establishment of communication across a plurality of sessions while imposing a reduced load on a network and a server.

According to an embodiment of a first aspect of the present invention, there is provided a session link system which links a plurality of independent sessions so as to multicast to the plurality of independent sessions data transmitted from a multicast terminal. The plurality of independent sessions includes a first session. The session link system includes: a link server; a session liaison; and a liaison manager. The link server establishes a link session for linking the plurality of independent sessions. The link session is attended by the multicast terminal. The session liaison attends the link session and the first session, receives the data in the link session, and transmits the data in the first session. The liaison manager controls the session liaison to attend the link session and the first session.

The session link system may operate as follows, wherein the first session is established by a first session server. The multicast terminal transmits first voice data to the link server. The link server multicasts the first voice data to attendees of the link session. The attendees of the link session include the session liaison. The session liaison transmits the first voice data to the first session server. The first session server multicasts the first voice data to attendees of the first session.

The session link system may operate as follows, wherein the first session is attended by a first session terminal. The first session terminal transmits second voice data to the first session server. The first session server multicasts the second voice data to the attendees of the first session. The attendees of the first session include the session liaison. The session liaison transmits the second voice data to the link server. The link server multicasts the second voice data to the attendees of the link session.

The session liaison of the session link system may include a data storage for storing media transmission information indicating whether or not to transmit the second voice data to the link server. And the session liaison may transmit the second voice data to the link server on the basis of the media transmission information.

The session liaison of the session link system may include a data storage for storing member acquisition information indicating whether or not to transmit member information in the first session. The member information is of an attendee in the link session. And the session liaison may transmit the member information in the first session on the basis of the member acquisition information.

According to an embodiment of a second aspect of the present invention, there is provided a session liaison which links between a first session and a second session. The session liaison includes: a session subscriber which attends the first session and the second session; a data receiver which receives data in the first session; and a data transmitter which transmits the data in the second session.

According to an embodiment of a third aspect of the present invention, there is provided a liaison manager which manages a session liaison. The session liaison is for linking a first session established by a first session server and a second session established by a second session server. The liaison manager includes: a link request receiver which receives from the first session server a link request including information of the second session server; and a liaison controller which controls the session liaison to attend the first session and the second session.

According to an embodiment of a fourth aspect of the present invention, there is provided a session link method which is performed by a session link system. The session link system links a plurality of independent sessions so as to multicast to the plurality of independent sessions first data transmitted from a multicast terminal. The plurality of independent sessions include a first session. The session link system includes a data storage for storing a session identifier for identifying the first session. The session link method includes the steps of: receiving a link request which includes the session identifier from the multicast terminal; registering the session identifier in the data storage; establishing a link session for linking the plurality of independent sessions, wherein the link session is attended by the multicast terminal; attending the first session which is identified by the session identifier; receiving the first data from the multicast terminal in the link session; and multicasting the first data to the plurality of independent sessions.

According to an embodiment of a fifth aspect of the present invention, there is provided a session link method which is performed by a session liaison for linking between a first session and a second session. The session link method includes the steps of: attending the first session and the second session; receiving data in the first session; and transmitting the data in the second session.

According to an embodiment of a sixth aspect of the present invention, there is provided a session link method which is performed by a session liaison for linking a first session established by a first session server and a second session established by a second session server. The session link method includes the steps of: attending the first session and the second session; transmitting an address of the second session server to the first session server as a first voice reception address of the session liaison, wherein the first voice reception address is for receiving voice data in the first session; and transmitting an address of the first session server to the second session server as a second voice reception address of the session liaison, wherein the second voice reception address is for receiving voice data in the second session.

According to an embodiment of a seventh aspect of the present invention, there is provided a program storage medium which is readable by a computer. The program storage medium stores a program of instructions for the computer to execute a session link method. The computer is included in a session link system. The session link system links a plurality of independent sessions so as to multicast to the plurality of independent sessions first data transmitted from a multicast terminal. The plurality of independent sessions include a first session. The computer includes a data storage for storing a session identifier for identifying the first session. The session link method includes the steps of: receiving a link request which includes the session identifier from the multicast terminal; registering the session identifier in the data storage; establishing a link session for linking the plurality of independent sessions, wherein the link session is attended by the multicast terminal; attending the first session which is identified by the session identifier; receiving the first data from the multicast terminal in the link session; and multicasting the first data to the plurality of independent sessions.

According to an embodiment of an eighth aspect of the present invention, there is provided a program storage medium which is readable by a computer. The program storage medium stores a program of instructions for the computer to execute a session link method. The computer is installed in a session liaison for linking between a first session and a second session. The session link method includes the steps of: attending the first session and the second session; receiving data in the first session; and transmitting the data in the second session.

According to an embodiment of a ninth aspect of the present invention, there is provided a program storage medium which is readable by a computer. The program storage medium stores a program of instructions for the computer to execute a session link method. The computer is installed in a session liaison for linking a first session established by a first session server and a second session established by a second session server. The session link method includes the steps of: attending the first session and the second session; transmitting an address of the second session server to the first session server as a first voice reception address of the session liaison, wherein the first voice reception address is for receiving voice data in the first session; and transmitting an address of the first session server to the second session server as a second voice reception address of the session liaison, wherein the second voice reception address is for receiving voice data in the second session.

Embodiments of the present invention may have an advantage of enabling effective achievement of extended multicast in a plurality of sessions. That is, the extended multicast in the plurality of sessions may be performed simply by bringing a small number of session liaisons into usually operated sessions. Thus, the extended multicast communication may be established in a substantially short time period. Further, the exiting sessions may be effectively used to reduce new processing for the extended multicast. It may therefore be possible to substantially reduce a network load and a server load required for the extended multicast.

### BRIEF DESCRIPTION OF THE DRAWINGS

Fig. 1 is a diagram illustrating a system configuration of a PoC system applied with a PoC session link method according to an embodiment of the present invention.
Fig. 2 is a diagram for explaining details of the system of Fig. 1.
Fig. 3 is a diagram illustrating an example of the data structure of the session information storage 18 in the embodiment of the present invention.
Fig. 4 is a diagram illustrating an example of the data structure of the link setting storage 28 in the embodiment of the present invention.
Fig. 5 is a flowchart of a PoC session link method according to the embodiment of the present invention.
Fig. 6 is a diagram illustrating the processing flow of the establishment of the PoC session 10 in the embodiment of the present invention.
Fig. 7 is a diagram illustrating the processing flow of the preparation of the session liaison 4 in the embodiment of the present invention.
Fig. 8 is a diagram illustrating the processing flow of the establishment of the link PoC session 12 in the embodiment of the present invention.
Fig. 9 is a diagram illustrating the processing flow of the voice data transmission in the embodiment of the present invention.
Fig. 10 is a diagram illustrating examples of display screens of PoC terminals in the embodiment of the present invention.
Fig. 11 is a diagram illustrating examples of display screens of PoC terminals in the embodiment of the present invention.
Fig. 12 is a diagram illustrating examples of display screens of PoC terminals in the embodiment of the present invention.
Fig. 13 is a diagram illustrating examples of display screens of PoC terminals in the embodiment of the present invention.
Fig. 14 is a diagram illustrating examples of display screens of PoC terminals in the embodiment of the present invention.
Fig. 15 is a diagram illustrating examples of display screens of PoC terminals in the embodiment of the present invention.
Fig. 16 is a diagram illustrating an example of computer environment.

### DESCRIPTION OF THE PREFERRED EMBODIMENTS

Embodiments will be described below on the basis of the drawings.

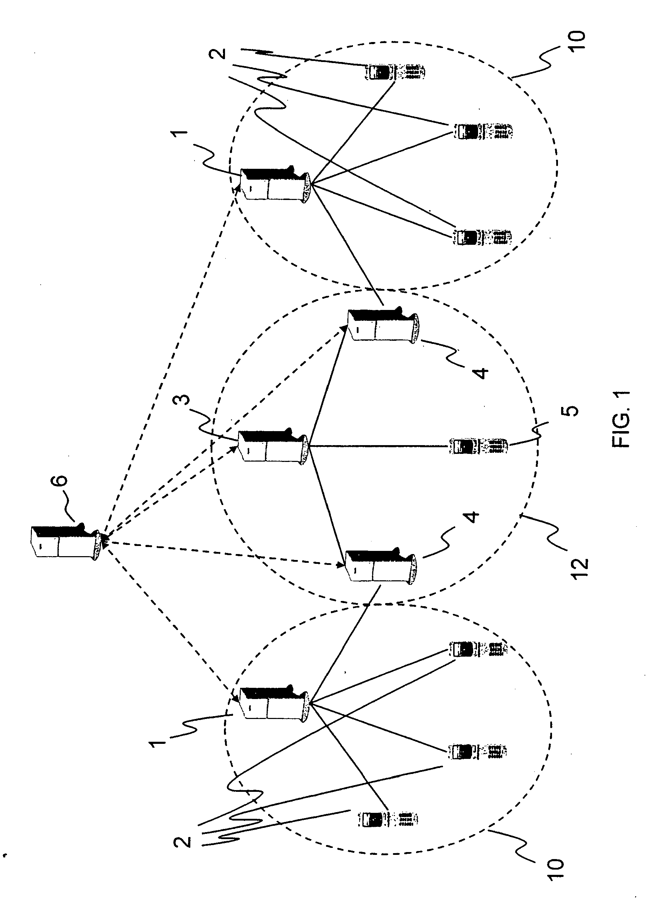

Fig. 1 is a diagram illustrating a system configuration of a PoC system applied with a PoC session link method according to an embodiment of the present invention. In Fig. 1, a link PoC session 12 is established to link two PoC sessions 10. Each of the PoC sessions 10 is established by a PoC server 1 and attended by a plurality of PoC terminals 2. When a PoC session 10 is established, the PoC server 1 registers information of the PoC session 10 in a liaison manager 6. When a multicast terminal 5 refers to the liaison manager 6 and selects the PoC session 10 as a link target session, the liaison manager 6 makes a session liaison 4 attend the PoC session 10. Further, the link PoC session 12 is established by a link PoC server 3 (which is equal to the PoC server 1 in the functions relating to the PoC service), and is attended by the session liaisons 4 and the multicast terminal 5.

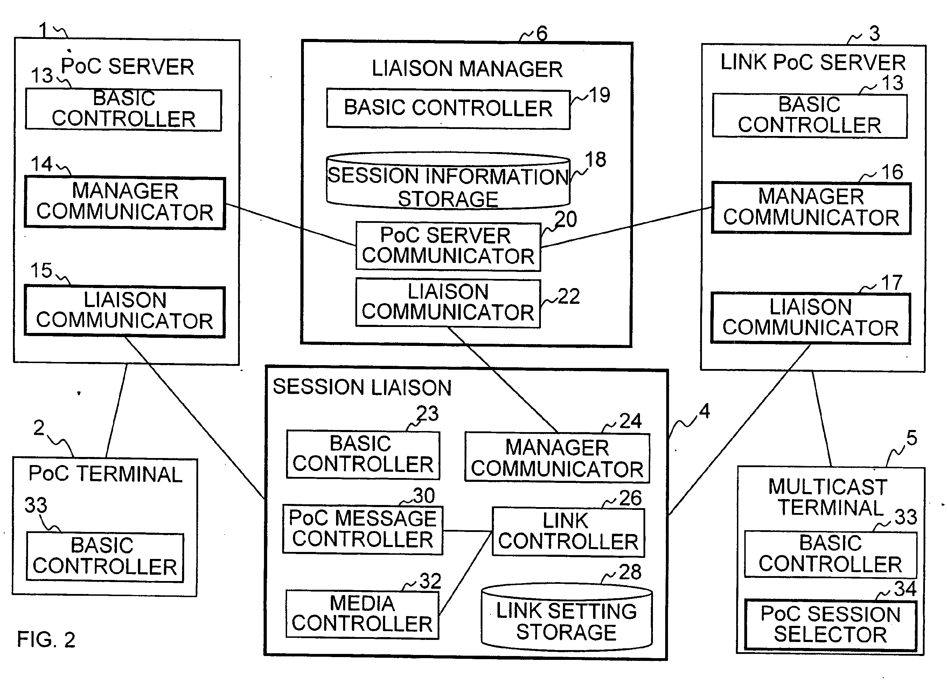

Fig. 2 is a diagram for explaining details of the system of Fig. 1. In addition to a conventional PoC system, a session liaison 4 and a liaison manager 6 are newly introduced. Description thereof will be given later. In the PoC server 1, a manager communicator 14 and a liaison communicator 15 are newly introduced in addition to a basic controller 13 which represents functions of a normal PoC server. In the link PoC server 3, a manager communicator 16 and a liaison communicator 17 are newly introduced in addition to the basic controller 13 which represents functions of a normal PoC server. In the multicast terminal 5, a PoC session selector 34 is newly introduced in addition to a basic controller 33 which represents functions of a normal PoC terminal.

The liaison manager 6 includes a session information storage 18 for storing information of the PoC session 10, a PoC server communicator 20 for communicating with the PoC server 1 and the link PoC server 3, and a liaison communicator 22 for communicating with the session liaison 4. Other functions of the liaison manager 6 are performed by a basic controller 19.

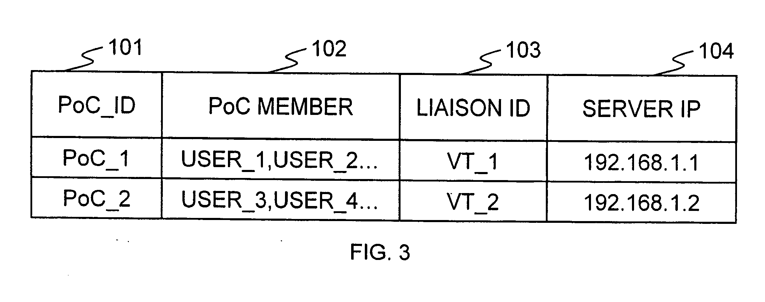

Fig. 3 is a diagram illustrating an example of the data structure of the session information storage 18 in the embodiment of the present invention. PoC_ID 101 is an identifier (hereinafter, referred to as ID) for identifying the PoC session 10. PoC MEMBER 102 is a list of members who are attending the PoC session 10. LIAISON ID 103 is an ID for identifying the session liaison 4. SERVER IP 104 is an IP address of the PoC server 1. For the convenience of a user, the name of the PoC session 10 may be defined and registered in the session information storage 18 to be managed. This may be performed as that a system manager who manages the liaison manager 6 writes the name in the session information storage 18, or as that a session organizer specifies the name together with the PoC MEMBER 102 at the establishment of the PoC session 10 to inform the liaison manager 6 of the name from the PoC terminal 2. By so doing, it is possible to identify the PoC session 10 by the name of the PoC session 10 without checking the individual members.

The session liaison 4 includes a manager communicator 24 for communicating with the liaison manager 6, a link controller 26, a link setting storage 28, a PoC message controller 30, and a media controller 32. Other functions of the session liaison 4 are performed by a basic controller 23. The link controller 26 controls permission to transfer a PoC message and voice data. The link setting storage 28 stores information of the range of information shared in the linked sessions. The PoC message controller 30 performs the transfer and the generation of the PoC message. The media controller 32 performs the transfer and the discard of voice data.

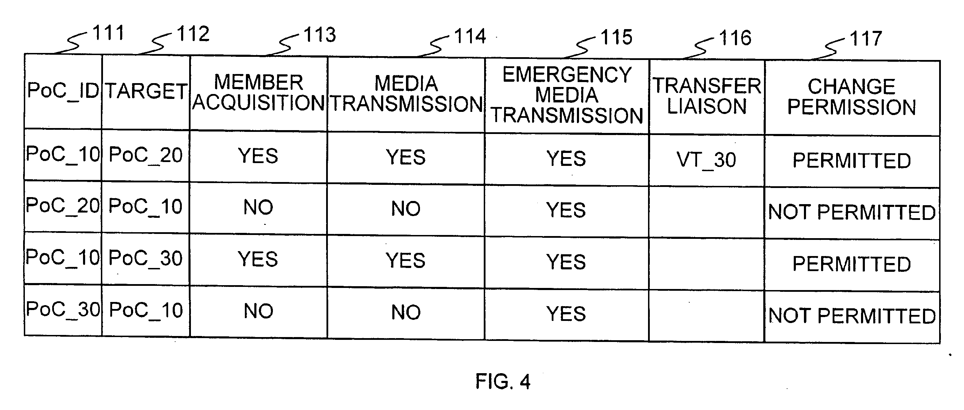

Fig. 4 is a diagram illustrating an example of the data structure of the link setting storage 28 in the embodiment of the present invention. The link setting storage 28 stores a set of information of two sessions (the PoC session 10 and the link PoC session 12) which a session liaison 4 attends. PoC_ID 111 is an ID for identifying the two PoC sessions 10 to be linked or the link PoC session 12. TARGET 112 is an ID representing the PoC session 10 as a link target or the link PoC session 12. MEMBER ACQUISITION 113 is a flag indicating whether or not the members of the PoC session 10 as the link target or the link PoC session 12 can be seen. MEDIA TRANSMISSION 114 is a flag indicating whether or not the transmission of voice data to the PoC session 10 as the link target or the link PoC session 12 is permitted. EMERGENCY MEDIA TRANSMISSION 115 is a flag indicating whether or not the transmission of voice data to the PoC session 10 as the link target or the link PoC session 12 is permitted in an emergency. TRANSFER LIAISON 116 is information indicating that the voice data transmitted from the session liaison 4 registered herein is transferred to the PoC session 10 as the link target or the link PoC session 12. CHANGE PERMISSION 117 is a flag indicating whether or not a change of the current data on the PoC session 10 and the link PoC session 12 is permitted.

For example, Fig. 4 illustrates a state in which PoC_20 and PoC_30 are linked by PoC_10. PoC_20 and PoC_30 are PoC sessions 10. PoC_10 is a link PoC session 12. According to the current registration information of Fig. 4, PoC_10 can see the members of PoC_20, PoC_10 can transmit voice data to PoC_20, PoC_10 can transfer the voice data transmitted from VT_30 (a session liaison 4 of PoC_30) to PoC_20, and the above settings relating to PoC_10 can be changed. Further, PoC_20 cannot see the members of PoC_10, PoC_20 can transmit voice data to PoC_10 only in an emergency, and the above settings relating to PoC_20 cannot be changed. The same applies to PoC_10 and PoC_30. Since the TRANSFER LIAISON 116 is not defined, however, the transfer of the voice data transmitted from another session liaison 4 is not permitted.

The content of the link setting storage 28 stores a default value for the session liaison 4. Alternatively, the setting content may be specified when the multicast terminal 5 requests the link PoC server 3 to establish the link PoC session 12.

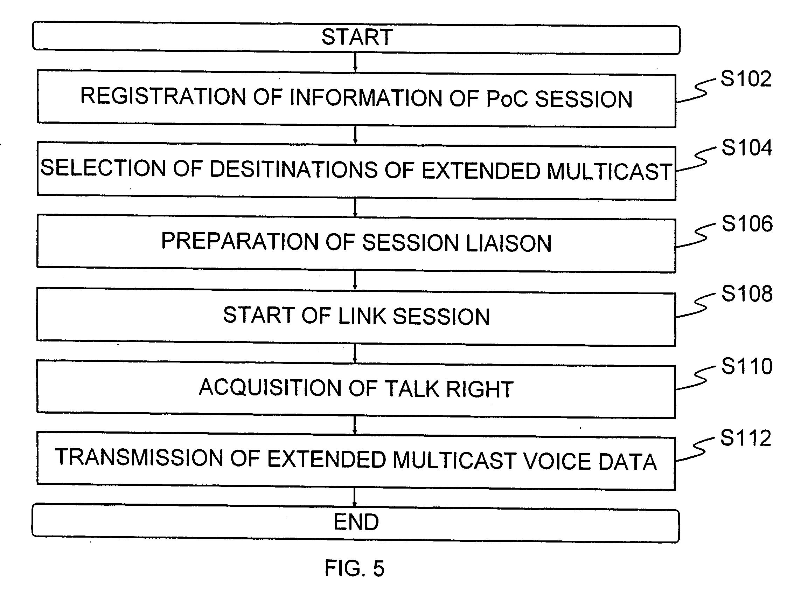

Fig. 5 is a flowchart of a PoC session link method according to the embodiment of the present invention. The processing flow of the system in the present embodiment will be described in accordance with Fig. 5.

(Step S102) Registration of information of the PoC sessions 10: The information of the PoC sessions 10 needs to be managed to achieve the link PoC session 12. When a new PoC session 10 is established, the PoC server 1 therefore informs the liaison manager 6 of the information of the PoC session 10, and the liaison manager 6 registers the information in the session information storage 18. At this stage, the PoC_ID 101, the PoC MEMBER 102, and the SERVER IP 104 are registered.

(Step S104) Selection of destinations of the extended multicast: The multicast terminal (a link request terminal) 5 which intends to perform extended multicast, accesses the liaison manager 6 via the link PoC server 3, and refers to the information of the PoC sessions 10. The multicast terminal 5 requests the liaison manager 6 to establish the link PoC session 12 via the link PoC server 3, while specifying the PoC sessions 10 as the destination of the extended multicast.

(Step S106) Preparation of session liaisons 4: The liaison manager 6 determines session liaisons 4 to attend the specified PoC sessions 10, registers the LIAISON IDs 103 in the session information storage 18, and requests the session liaisons 4 for preparation. The session liaisons 4 log on the respective PoC servers 1 of the specified PoC sessions 10, and request for attendance in the PoC sessions 10. Further, the session liaisons 4 log on the link PoC server 3. The "log on" employed here refers to securing a communication path to the PoC server 1 or the link PoC server 3 so as to receive a control signal from the PoC server 1 or the link PoC server 3. The session liaison 4 is regarded as a special member for the PoC server 1. That is, the session liaison 4 is permitted late attendance in an already established PoC session 10, and is also permitted forcible acquisition of talk right.

(Step S108) Establishment of a link PoC session 12: The liaison manager 6 requests the link PoC server 3 to establish the link PoC session 12. When the link PoC server 3 informs the session liaisons 4 of the establishment of the link PoC session 12, the session liaisons 4 request the link PoC server 3 for attendance in the link PoC session 12. When the link PoC server 3 informs the multicast terminal 5 of the establishment of the link PoC session 12, the multicast terminal 5 requests the link PoC server 3 for attendance in the link PoC session 12.

(Step S110) Acquisition of talk right: The multicast terminal 5 requests the link PoC server 3 for acquisition of the talk right. When the link PoC server 3 informs the session liaisons 4 of the grant of the talk right to the multicast terminal 5, the session liaisons 4 request the respective PoC servers 1 for forcible acquisition of the talk right.

(Step S112) Transmission of extended multicast voice data: The multicast terminal 5 transmits voice data to the link PoC server 3, the link PoC server 3 then multicasts the voice data to the session liaisons 4. The session liaisons 4 transfer the voice data to the respective PoC servers 1, the PoC servers 1 then multicast the voice data to the PoC terminals 2.

The above is a summary of the processing flow of the PoC session link method according to the embodiment of the present invention. The processing flow will be then described in detail.

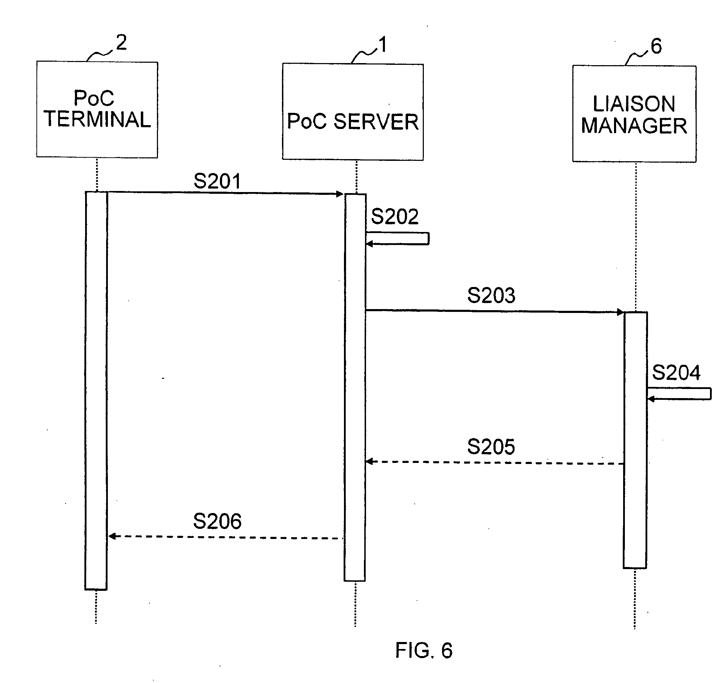

Along with the establishment of a PoC session 10, information of the PoC session 10 is registered. Fig. 6 is a diagram illustrating the processing flow of the establishment of the PoC session 10 in the embodiment of the present invention.

(Step S201) The PoC terminal 2 requests the PoC server 1 to establish the PoC session 10. In this step, the PoC terminal 2 specifies PoC MEMBER 102 of the PoC session 10.

(Step S202) The PoC server 1 establishes the PoC session 10. In this step, the PoC server 1 determines the PoC_ID 101.

(Step S203) The PoC server 1 informs the liaison manager 6 of the establishment of the PoC session 10. In this step, the PoC server 1 conveys the PoC_ID 101, the PoC MEMBER 102, and the SERVER IP 104 which is an IP address of the PoC server 1 itself to the liaison manager 6.

(Step S204) The liaison manager 6 registers the PoC_ID 101, the PoC MEMBER 102, and the SERVER IP 104 in the session information storage 18.

(Step S205) The liaison manager 6 informs the PoC server 1 that the information of the PoC session 10 has been registered.

(Step S206) The PoC server 1 informs the PoC terminal 2 of the establishment of the PoC session 10. In this step, the PoC server 1 conveys the PoC_ID 101 to the PoC terminal 2.

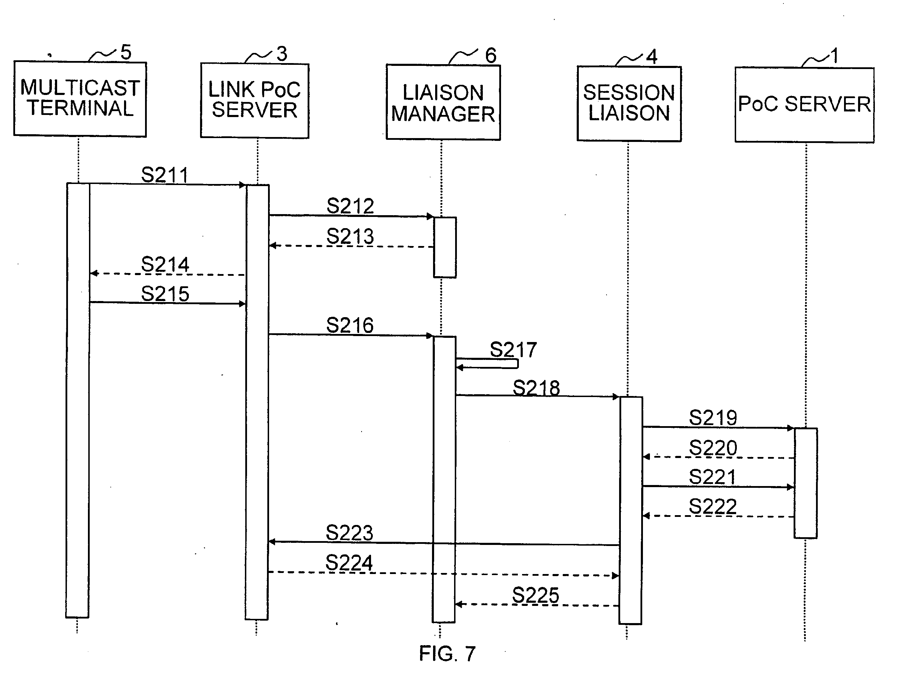

Fig. 7 is a diagram illustrating the processing flow of the preparation of the session liaison 4 in the embodiment of the present invention.

(Step S211) The multicast terminal 5 requests the link PoC server 3 for reference to the information of the PoC session 10.

(Step S212) The link PoC server 3 requests the liaison manager 6 for reference to the information of the PoC session 10.

(Step S213) The liaison manager 6 returns the PoC_ID 101 and the PoC MEMBER 102 which are registered in the session information storage 18, to the link PoC server 3.

(Step S214) The link PoC server 3 returns the PoC_ID 101 and the PoC MEMBER 102 to the multicast terminal 5.

(Step S215) The multicast terminal 5 requests the link PoC server 3 for link to the PoC session 10. In this step, the multicast terminal 5 conveys USER_ID which is an ID for identifying the multicast terminal 5 itself, and the PoC_ID 101 of the PoC session 10 to which the multicast terminal 5 intends to be linked. In addition to the PoC_ID 101, an ID for identifying an individual member to whom the multicast terminal 5 intends to be further linked may be conveyed.

(Step S216) The link PoC server 3 requests the liaison manager 6 for link to the PoC session 10. In this step, the link PoC server 3 conveys the USER_ID, the PoC_ID 101, and LINK SERVER IP which is an IP address of the link PoC server 3 itself to the liaison manager 6.

(Step S217) The liaison manager 6 selects a session liaison 4, determines LIAISON ID 103, and resisters the LIAISON ID 103 in the session information storage 18.

(Step S218) The liaison manager 6 requests the session liaison 4 for preparation for link. In this step, the liaison manager 6 specifies the PoC_ID 101, the LINK SERVER IP, the SERVER IP 104, and the LIAISON ID 103.

(Step S219) The session liaison 4 requests the PoC server 1 for log-on. In this step, the session liaison 4 conveys the LIAISON ID 103 and a voice data reception address for receiving voice data to the PoC server 1.

(Step S220) The PoC server 1 permits the session liaison 4 to log on.

(Step S221) The session liaison 4 requests the PoC server 1 for forcible attendance in the PoC session 10 while specifying the PoC_ID 101. In this step, if it is determined by referencing to the link setting storage 28 that the PoC session 10 may acquire the members of the link PoC session 12, the session liaison 4 also conveys the PoC MEMBER 102 of the link PoC session 12 to the PoC server 1.

(Step S222) The PoC server 1 permits the session liaison 4 to attend the PoC session 10. In this step, the PoC server 1 conveys a voice data transmission address which is the destination of the transmission of voice data, and the PoC MEMBER 102 of the PoC session 10 to the session liaison 4.

(Step S223) The session liaison 4 requests the link PoC server 3 for log-on. In this step, the session liaison 4 conveys the LIAISON ID 103 and the voice data reception address for receiving voice data to the link PoC server 3.

(Step S224) The link PoC server 3 permits the session liaison 4 to log on.

(Step S225) The session liaison 4 informs the liaison manager 6 of the completion of the preparation.

In the above-described procedure, the multicast terminal 5 specifies the PoC session 10 (Step S215). The procedure may be arranged such that the multicast terminal 5 simply specifies the members to attend a session, and that the link PoC server 3 selects the appropriate PoC session 10. In such a case, Steps S211 and S214 are modified as follows, and Step S215 is omitted.

(Step S211') The multicast terminal 5 requests the link PoC server 3 for link to the PoC session 10. In this step, the multicast terminal 5 conveys the USER_ID which is an ID for identifying the multicast terminal 5 itself, and PoC MEMBER LIST which is a list of IDs for identifying the members to whom the multicast terminal 5 intends to be linked to the link PoC server 3.

(Step S214') The link PoC server 3 selects PoC sessions 10 such that the PoC sessions 10 include all members included in the PoC MEMBER LIST. Any method can be used for the selection. For example, a PoC_ID 101 corresponding to a PoC MEMBER 102 which includes the most of the members included in the PoC MEMBER LIST is selected, and a PoC_ID 101 corresponding to a PoC MEMBER 102 which includes the most of the rest of the members included in the PoC MEMBER LIST is selected. This procedure is repeated until all members of the PoC MEMBER LIST are included. If there remains a member not included in any of the PoC MEMBERs 102, the member is made attend the link PoC session 12 as an individual member.

By doing so, there is no need to newly introduce the PoC session selector 34 into the multicast terminal 5. Thus, the multicast from the normal PoC terminal 2 can be performed.

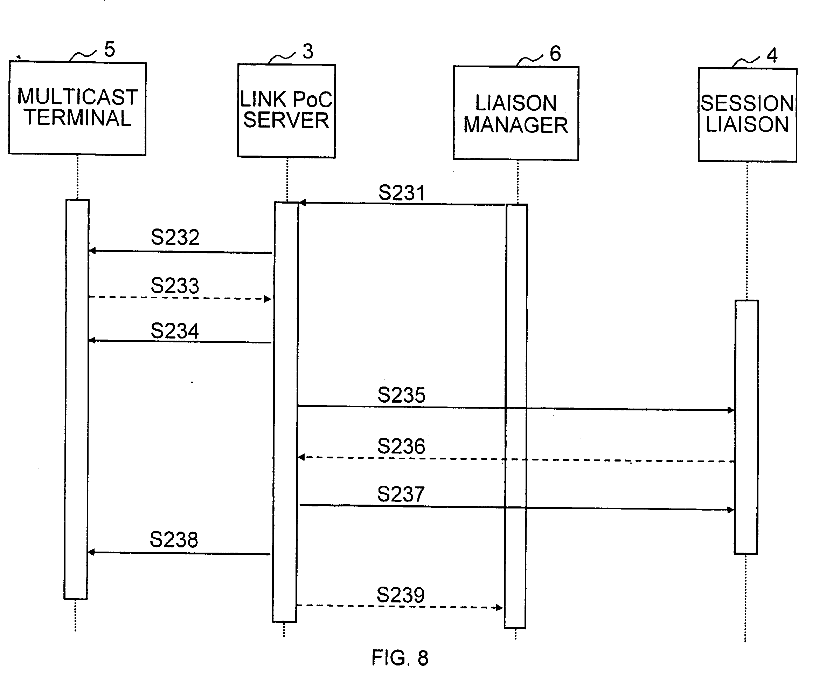

Fig. 8 is a diagram illustrating the processing flow of the establishment of the link PoC session 12 in the embodiment of the present invention. The establishment processing is performed immediately after the liaison manager 6 has received the notice of the completion of the above-described preparation.

(Step S231) The liaison manager 6 requests the link PoC server 3 for establishment of the link PoC session 12. In this step, the liaison manager 6 specifies a USER_ID and a LIAISON ID 103.

(Step S232) The link PoC server 3 informs the multicast terminal 5 of the establishment of the link PoC session 12. In this step, the link PoC server 3 conveys LINK PoC_ID to the multicast terminal 5.

(Step S233) The multicast terminal 5 requests the link PoC server 3 for attendance in the link PoC session 12 while specifying the LINK PoC_ID.

(Step S234) The link PoC server 3 permits the multicast terminal 5 to attend the link PoC session 12. In this step, the link PoC server 3 conveys a voice data transmission address which is the destination of the transmission of voice data, to the multicast terminal 5.

(Step S235) The link PoC server 3 informs the session liaison 4 of the establishment of the link PoC session 12. In this step, the link PoC server 3 conveys the LINK PoC_ID which is an ID for identifying the link PoC session 12, and the USER_ID to the session liaison 4.

(Step S236) The session liaison 4 requests the link PoC server 3 for attendance in the link PoC session 12, while specifying the LINK PoC_ID. In this step, if it is determined by referencing to the link setting storage 28 that the link PoC session 12 may acquire the members of the PoC session 10, the session liaison 4 also conveys the PoC MEMBER 102 corresponding to the PoC session 10 to the link PoC server 3.

(Step S237) The link PoC server 3 permits the session liaison 4 to attend the link PoC session 12. In this step, the link PoC server 3 conveys the voice data transmission address which is the destination of the transmission of voice data to the session liaison 4.

(Step S238) The link PoC server 3 conveys the LIAISON ID 103 as a new attendee of the link PoC session 12 to the multicast terminal 5. If the link PoC server 3 has been informed of the PoC MEMBER 102 corresponding to the PoC session 10 in Step S236, the link PoC server 3 further conveys the PoC MEMBER 102 to the multicast terminal 5.

(Step S239) The link PoC server 3 informs the liaison manager 6 of the establishment of the link PoC session 12. In this step, the link PoC server 3 conveys the LINK PoC_ID, the PoC MEMBER 102, and the LINK SERVER IP which is an IP address of the link PoC server 3 itself to the liaison manager 6.

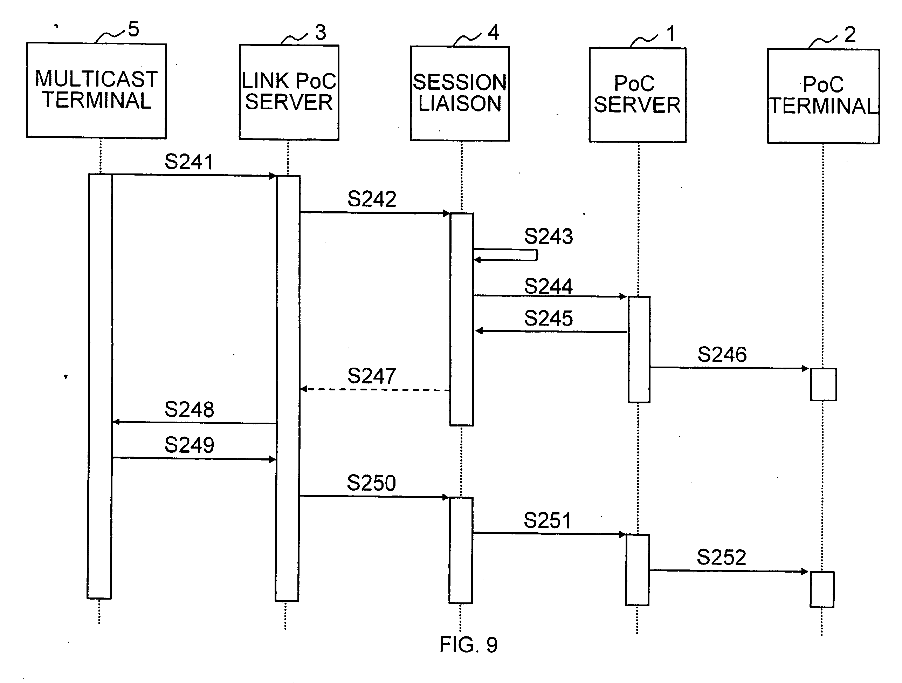

Fig. 9 is a diagram illustrating the processing flow of the voice data transmission in the embodiment of the present invention.

(Step S241) The multicast terminal 5 requests the link PoC server 3 for acquisition of talk right in the link PoC session 12.

(Step S242) The link PoC server 3 informs the session liaison 4 of information of the talk right in the link PoC session 12.

(Step S243) The session liaison 4 refers to the link setting storage 28 so as to check whether or not the media transmission may be performed from the link PoC session 12 to the PoC session 10. If the media transmission may not be performed, the processing ends here.

(Step S244) The session liaison 4 requests the PoC server 1 for forcible acquisition of talk right in the PoC session 10.

(Step S245) The PoC server 1 informs the session liaison 4 of information of the talk right in the PoC session 10.

(Step S246) The PoC server 1 informs the PoC terminal 2 of the information of the talk right in the PoC session 10.

(Step S247) The session liaison 4 returns to the link PoC server 3, a response to the notice of the talk right in the link PoC session 12.

(Step S248) The link PoC server 3 informs the multicast terminal 5 of the information of the talk right in the link PoC session 12.

(Step S249) The multicast terminal 5 transmits voice data to the link PoC server 3.

(Step S250) The link PoC server 3 transmits the voice data to the session liaison 4.

(Step S251) The session liaison 4 transmits the voice data to the PoC server 1.

(Step S252) The PoC server 1 transmits the voice data to the PoC terminal 2.

As described above, according to the present embodiment, the multicast can be performed simply by bringing a small number of the session liaisons into the link PoC sessions. Thus, high-speed extended multicast can be performed in a plurality of PoC sessions. Further, the present embodiment effectively uses the exiting PoC sessions, and thus has a characteristic of being small in the load on a network and a server required for the extended multicast.

In the above description, the procedure is configured such that the session liaison 4 attends the specified PoC session 10 after the reception of the link establishment request from the multicast terminal 5 (Step S215). Instead of this, the procedure may be configured such that the session liaison 4 attends the PoC session 10 immediately after the registration of the PoC session 10 in the session information storage 18. That is, the procedure of Steps S217 to S222 is completed prior to Step S205. By doing so, it is possible to reduce the time taken from the link establishment request by the multicast terminal 5 (Step S215) to the actual establishment of the voice data transmission by the multicast terminal 5 (Step S249).

The above description is based on the assumption that the link PoC server 3, the liaison manager 6, and the PoC servers 1 and the session liaisons 4 relating to the respective PoC sessions 10 are different apparatuses. However, they may be physically embodied in a single apparatus in an arbitrary combination. For example, if the two PoC servers 1 and the link PoC server 3 of Fig. 1 are physically embodied in a single apparatus, the link PoC server 3 is already known upon registration of the PoC session 10 in the session information storage 18. Thus, the log-on of the session liaisons 4 to the link PoC server 3 can be completed at that point in time. That is, the procedure of Steps S223 to S224 can be also completed prior to Step S205. By doing so, it is possible to further reduce the time taken from the link establishment request by the multicast terminal 5 (Step S215) to the actual establishment of the voice data transmission by the multicast terminal 5 (Step S249). If the link PoC server 3 has been fixedly determined in advance, the reduction in time can be similarly achieved, even if the PoC servers 1 and the link PoC server 3 are embodied in physically different apparatuses.

The replacement of the voice data transmission/reception addresses may be performed between the above-described Steps S237 and S238. That is, the session liaison 4 requests the PoC server 1 to replace the voice data reception address conveyed by the session liaison 4 to the PoC server 1 in Step S219, with the voice data transmission address conveyed from the link PoC server 3 in Step S237. In this case, the voice data reception address conveyed by the session liaison 4 to the link PoC server 3 in Step S223 is not the voice data reception address of the session liaison 4 itself, but the voice data transmission address conveyed from the PoC server 1 in Step S222. Thereby, actual voice communication can be directly performed between the PoC server 1 and the link PoC server 3 without routing through the session liaison 4. Accordingly, the resources required for the voice communication can be reduced.

In the above description, only the extended multicast from the multicast terminal 5 is described. The extended multicast can be also performed from the PoC terminal 2 of the linked PoC session 10. For example, in Fig. 4, the session liaison 4 which is attending PoC_30 is assumed to be VT_30. When there is a question to the extended multicast from the multicast terminal 5, an attendee of PoC_30 can perform the multicast of the content of the question also to PoC_20. This is because the media transmission from PoC_30 to PoC_10 is normally inhibited but is permitted in an emergency, and PoC_10 is permitted to transfer the voice data transmitted from VT_30 to PoC_20. That is, by transmitting the content as in an emergency, the attendee of PoC_30 can multicast the transmitted content also in PoC_20. Meanwhile, according to the setting of Fig. 4, an attendee of PoC_20 cannot multicast the content in PoC_30. This is because the TRANSFER LIAISON 116 is not defined.

If the user of the multicast terminal 5 initially expects the arrival of such a question, it is possible to change the content of the link setting storage 28 such that the extended multicast of questions and answers is performed to all members. In Fig. 4, the CHANGE PERMISSION 117for PoC_10 is set to be "permitted" in both spots. If the user of the multicast terminal 5 requests for acquisition of link setting information from the multicast terminal 5 when requesting for establishment of the link PoC session 12, and transmits an instruction to register VT_20 which is an ID of the session liaison 4 which is attending PoC_20, as the information of the TRANSFER LIAISON 116 in the link information of PoC_10 to PoC_30, the attendees of PoC_20 and the attendees of PoC_30 can mutually perform the extended multicast.

Further, a plurality of the link PoC servers 3 can be linked in a similar manner to the manner in which a plurality of the PoC servers 1 are linked. That is, it is possible to perform the extended multicast in PoC sessions with multi-layered hierarchy.

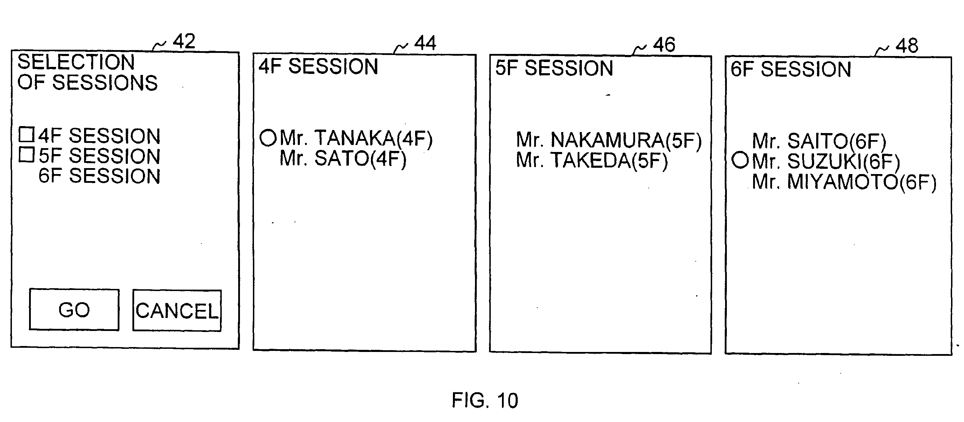

Figs. 10 to 15 are diagrams illustrating examples of display on PoC terminals in the embodiment of the present invention. In accordance with Figs. 10 to 15, description will be made of the flow of the display on the PoC terminals in the embodiment of the present invention.

Fig. 10 illustrates display screens of a PoC terminal 42 of a store manager (which corresponds to the multicast terminal of the above-described embodiment), a PoC terminal 44 of attendees of a fourth floor session, a PoC terminal 46 of attendees of a fifth floor session, and a PoC terminal 48 of attendees of a sixth floor session. The PoC terminal 42 of the store manager displays a screen on which the target sessions of the extended multicast are selected. The squares on the left side of the names of the sessions indicate that the store manager has selected the fourth floor session and the fifth floor session. Each of the PoC terminals of the attendees of the fourth floor session, the fifth floor session, and the sixth floor session displays the names of the attendees of the corresponding session. The circles on the left side of the names indicate the members who have acquired the talk right. In the fifth floor session, no one has acquired the talk right.

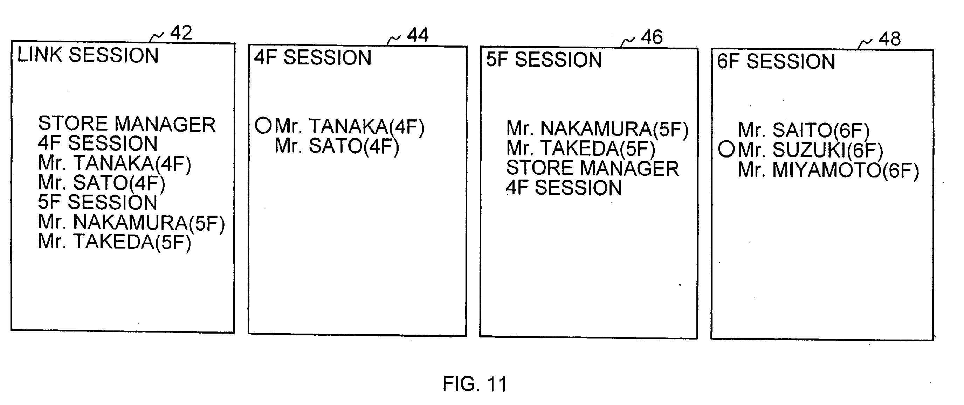

Fig. 11 illustrates the display screens of the respective PoC terminals after the selection of the sessions. The PoC terminal 42 of the store manager displays "STORE MANAGER," the names of the selected sessions, and the names of the attendees. "STORE MANAGER" and "FOURTH FLOOR SESSION" are additionally displayed on the PoC terminal 46 of the attendees of the fifth floor session. This means that the "MEMBER ACQUISITION" in the link setting storage of a session liaison which is attending the fifth floor session is set to be "YES" in both directions. Meanwhile, the display of the PoC terminal 44 of the attendees of the fourth floor session is unchanged. This means that the "MEMBER ACQUISITION" in the link setting storage of a session liaison which is attending the fourth floor session is set to be "YES" only on the side of a link PoC server.

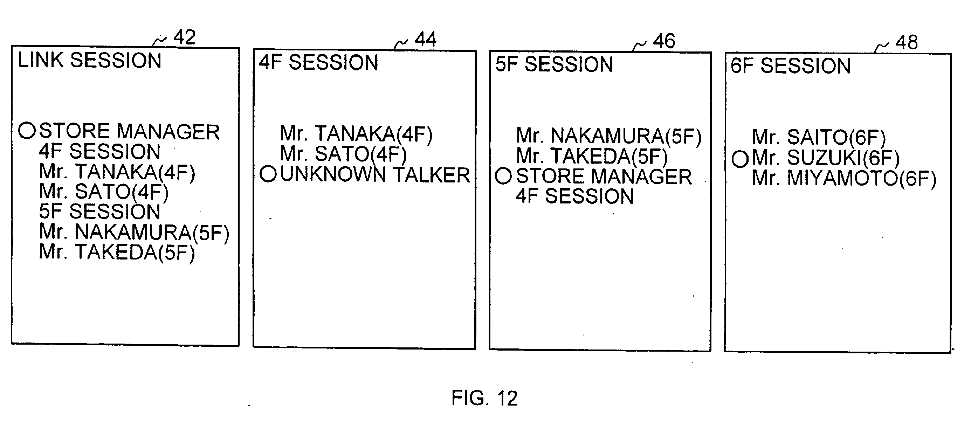

Fig. 12 illustrates the display screens of the respective PoC terminals in a state in which the store manager has acquired the talk right. The PoC terminal 42 of the store manager and the PoC terminal 46 of the attendees of the fifth floor session display the circle indicating that the store manager has acquired the talk right. Meanwhile, the PoC terminal 44 of the attendees of the fourth floor session additionally displays "UNKNOWN TALKER" as well as the circle indicating the acquisition of the talk right.

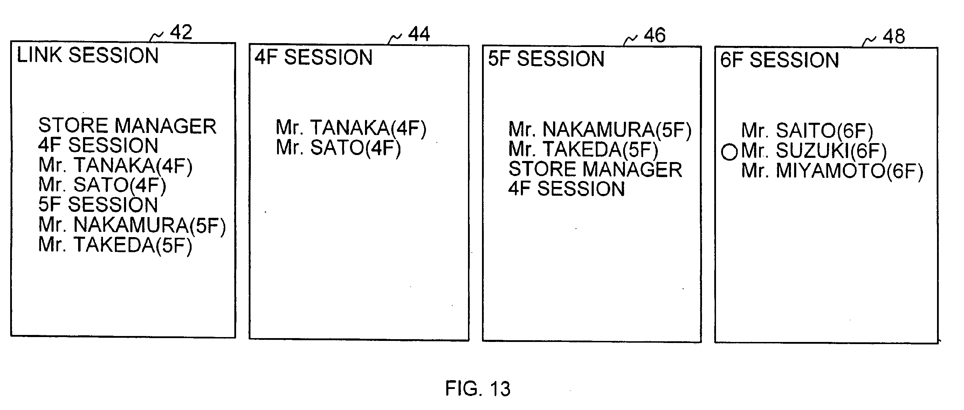

Fig. 13 illustrates the display screens of the respective PoC terminals after the release of the talk right by the store manager. From the PoC terminal 42 of the store manager and the PoC terminal 46 of the attendees of the fifth floor session, the circle on the left side of the "STORE MANAGER" indicating the acquisition of the talk right has disappeared. From the PoC terminal 44 of the attendees of the fourth floor session, the "UNKNOWN TALKER" has disappeared as well as the circle.

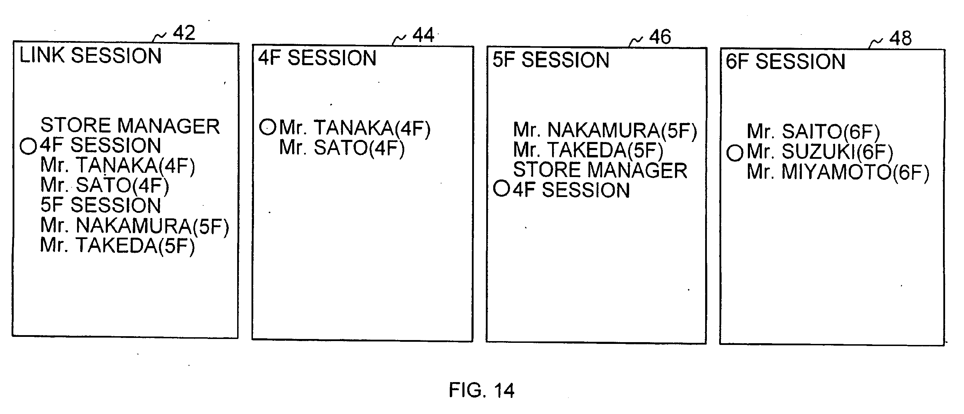

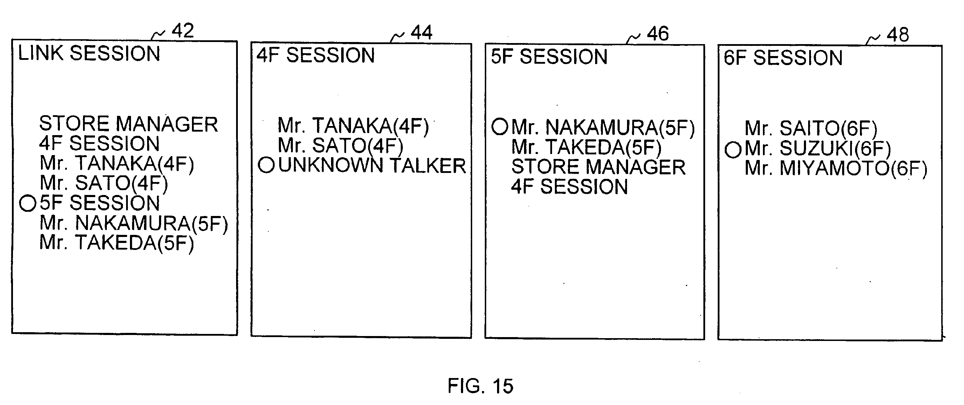

Figs. 14 and 15 illustrate the display screens of the respective PoC terminals in a state in which an attendee of the fourth floor session has acquired the talk right and a state in which an attendee of the fifth floor session has acquired the talk right.

When an attendee of the fourth floor session has acquired the talk right, the circle is attached to the name of the member who has acquired the talk right on the PoC terminal 44 of the attendees of the fourth floor session, as illustrated in Fig. 14. On the PoC terminal 42 of the store manager and the PoC terminal 46 of the attendees of the fifth floor session, a circle is attached to the "FOURTH FLOOR SESSION." Meanwhile, when an attendee of the fifth floor session has acquired the talk right, a circle is attached to the name of the member who has acquired the talk right on the PoC terminal 46 of the attendees of the fifth floor session, as illustrated in Fig. 15. On the PoC terminal 42 of the store manager, a circle is attached to "FIFTH FLOOR SESSION." Further, on the PoC terminal 44 of the attendees of the fourth floor session, the "UNKNOWN TALKER" is additionally displayed as well as a circle indicating the acquisition of the talk right.

The respective apparatuses according to the above-described embodiment can be implemented not only as hardware but also as software for a computer. For example, if a program is created which causes the computer to execute the functions of the manager communicator 24, the link controller 26, the PoC message controller 30, and the media controller 32, and if the computer is caused to read the program into the memory thereof and to execute the program, the session liaison 4 can be achieved.

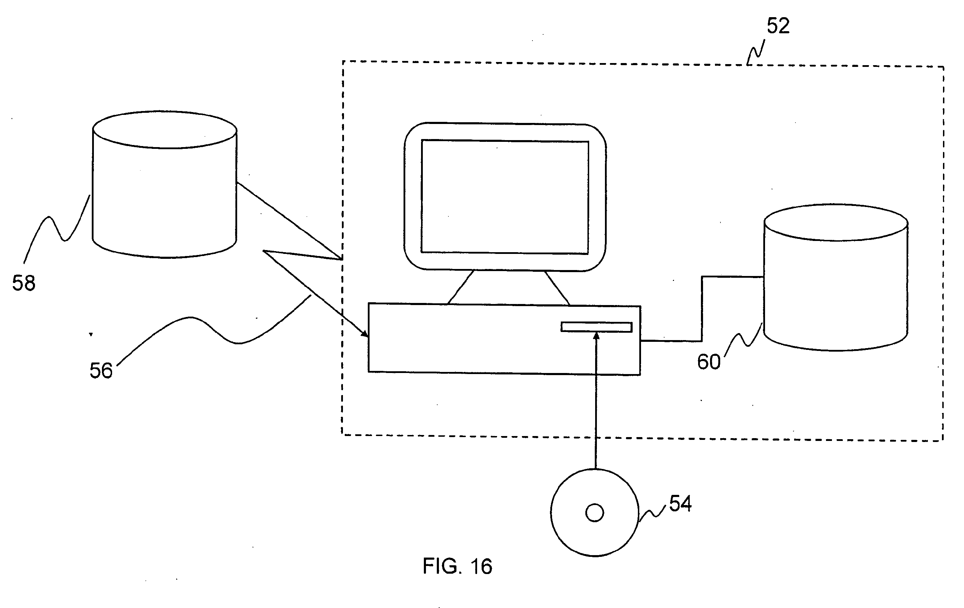

As illustrated in Fig. 16, the program for achieving the respective apparatuses according to the embodiment of the present invention may be the one stored not only in a transportable recording medium 54, such as a CD-ROM, a CD-RW, a DVD-R, a DVD-RAM, a DVD-RW, and a flexible disk, but also in any one of another memory device 58 provided to an end of a communication line 56 and a memory device/recording medium 60, such as a hard disk or a RAM of a computer system 52. On the execution of the program, the program is loaded and executed on a main memory.

In the present embodiment, the linking of the PoC sessions has been described. However, the technique according to the present invention is applicable not only to the PoC session but also to any session, as long as the session is established by a server, attended by terminals, and performed for information sharing among the terminals. That is, in a case in which a first session and a second session of a certain system are linked to each other, a session liaison attends the sessions as a terminal of the respective sessions, and the session liaison transmits information received in one of the sessions in the other session. To manage this well, a link session of the same system is established, and a session liaison attending both an existing session and the link session is disposed in each of existing sessions so that information is shared among the session liaisons which are attending the link session. Further, when a terminal attends the link session, the terminal can attend each of the linked sessions.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A session link system for linking a plurality of independent sessions (10) so as to multicast to the plurality of independent sessions (10) data transmitted from a multicast terminal (5), said plurality of independent sessions (10) including a first session (10), said session link system comprising:
a link server (3) for establishing a link session (12) for linking the plurality of independent sessions (10), said link session (12) being attended by the multicast terminal (5);
a session liaison (4) for
attending the link session (12) and the first session (10),
receiving the data transmitted from the multicast terminal (5) in the link session (12),
acquiring talk right in the first session (10), and
multicasting the data to the plurality of independent sessions (10) including the first session (10); and
a liaison manager (6) for controlling the session liaison (4) to attend the link session (12) and the first session (10).

2. The session link system of claim 1, which system is configured such that:
said first session (10) is established by a first session server,
said multicast terminal (5) is operable to transmit first voice data to the link server (3),
said link server (3) is operable to multicast the first voice data to attendees of the link session (12), said attendees of the link session (12) including the session liaison (4),
said session liaison (4) is operable to transmit the first voice data to the first session server, and
said first session server is operable to multicast the first voice data to attendees of the first session (10).

3. The session link system of claim 2, which system is configured such that:
said first session (10) is attended by a first session terminal,
said first session terminal is operable to transmit second voice data to the first session server,
said first session server is operable to multicast the second voice data to the attendees of the first session (10), said attendees of the first session (10) including the session liaison (4),
said session liaison (4) is operable to transmit the second voice data to the link server (3), and
said link server is operable to multicast the second voice data to the attendees of the link session (12).

4. The session link system of claim 3,
said session liaison (4) including a data storage for storing media transmission information indicating whether or not to transmit the second voice data to the link server (3),
said session liaison (4) being operable to transmit the second voice data to the link server (3) on the basis of the media transmission information.

5. The session link system of any preceding claim,
said session liaison (4) including a data storage for storing member acquisition information indicating whether or not to transmit member information in the first session (10), said member information being of an attendee in the link session (12),
said session liaison (4) being operable to transmit the member information in the first session (10) on the basis of the member acquisition information.

6. The session liaison link system of claim 1, wherein the plurality of independent sessions (10) includes the first session (10) attended by the multicast terminal (5) and a second session (10), the session liaison (4) comprising:
a session subscriber for attending the first session (10) and the second session (10);
a data receiver for receiving data transmitted from the multicast terminal (5) in the first session (10);
means for acquiring talk right in the second session (10); and
a data transmitter for transmitting the data in the second session (10).

7. The session liaison link system of claim 1, wherein said liaison manager (6) is operable to manage said session liaison (4) for linking a first session (10) established by a first session server and a second session (10) established by a second session server, said liaison manager (6) comprising:
a link request receiver for receiving from the first session server a link request including information of the second session server; and
a liaison controller for controlling the session liaison to attend the first session (10) and the second session (10).

8. A session link method performed by a session link system, said session link system linking a plurality of independent sessions (10) so as to multicast to the plurality of independent sessions (10) first data transmitted from a multicast terminal (5), said plurality of independent sessions (10) including a first session (10), said session link system including a data storage for storing a session identifier for identifying the first session (10), said session link method comprising the steps of:
receiving a link request including the session identifier from the multicast terminal (5);
registering the session identifier in the data storage;
establishing a link session (12) for linking the plurality of independent sessions (10), said link session (12) being attended by the multicast terminal (5);
attending the first session (10) identified by the session identifier;
receiving the first data from the multicast terminal (5) in the link session (12);
acquiring talk right in the first session (10); and
multicasting the first data to the plurality of independent sessions (10) including the first session (10).

9. The session link method of claim 8, said session link method further comprising the steps of:
receiving second data in the first session (10); and
transmitting the second data in the link session (12).

10. The session link method of claim 9,
said data storage storing media transmission information indicating whether or not to transmit the second data in the link session (12),
said step of transmitting the second data in the link session (12) being performed on the basis of the media transmission information.

11. The session link method of any of claims 8 to 10, said data storage storing member acquisition information indicating whether or not to transmit member information in the first session (10), said member information being of an attendee in the link session (12), said session link method further including the step of:
transmitting the member information in the first session (10) on the basis of the member acquisition information.

12. The session link method of any of claims 8 to 11,
said step of attending the first session (10) being performed after performance of the step of establishing a link session (12).

13. The session link method of any of claims 8 to 12,
said step of attending the first session (10) being performed after performance of the step of registering the session identifier.

14. The session link method of any of claims 8 to 13,
said first data being voice data.

15. The session link method of claim 8, wherein said plurality of independent sessions (10) includes the first session (10) attended by the multicast terminal (5) and a second session (10), and the method comprises the steps of:
attending the first session (10) and the second session (10);
receiving data transmitted from the multicast terminal (5) in the first session (10);
acquiring talk right in the second session (10); and
transmitting the data in the second session (10).

16. The session link method of claim 8, wherein a first session (10) is established by a first session server and a second session (10) is established by a second session server, said method comprising the steps of:
attending the first session (10) and the second session (10);
transmitting an address of the second session server to the first session server as a first voice reception address of the session liaison, said first voice reception address being for receiving voice data in the first session (10); and
transmitting an address of the first session server to the second session server as a second voice reception address of the session liaison, said second voice reception address being for receiving voice data in the second session (10).

17. A program storage medium readable by a computer, said program storage medium storing a program of instructions for the computer to execute a session link method, said computer being included in a session link system, said session link system linking a plurality of independent sessions (10) so as to multicast to the plurality of independent sessions (10) first data transmitted from a multicast terminal (5), said plurality of independent sessions (10) including a first session (10), said computer including a data storage for storing a session identifier for identifying the first session (10), said session link method comprising the steps of:
receiving a link request including the session identifier from the multicast terminal (5);
registering the session identifier in the data storage;
establishing a link session (2) for linking the plurality of independent sessions (10), said link session (12) being attended by the multicast terminal (5);
attending the first session (10) identified by the session identifier;
receiving the first data from the multicast terminal (5) in the link session (12);
acquiring talk right in the first session (10); and
multicasting the first data to the plurality of independent sessions (10) including the first session (10).

18. The program storage medium of claim 17, said session link method further comprising the steps of:
receiving second data in the first session (10); and
transmitting the second data in the link session (12).

19. The program storage medium of claim 18,
said data storage storing media transmission information indicating whether or not to transmit the second data in the link session (12),
said step of transmitting the second data in the link session (12) being performed on the basis of the media transmission information.

20. The program storage medium of any of claims 17 to 19, said data storage storing member acquisition information indicating whether or not to transmit member information in the first session (10), said member information being of an attendee in the link session (12), said session link method further comprising the step of:
transmitting the member information in the first session (10) on the basis of the member acquisition information.

21. The program storage medium of any of claims 17 to 20,
said step of attending the first session (10) being performed after performance of the step of establishing a link session (12).

22. The program storage medium of any of claims 17 to 21,
said step of attending the first session (10) being performed after performance of the step of registering the session identifier.

23. The program storage medium of any of claims 17 to 22,
said first data being voice data.

24. The program storage medium of claim 17, wherein said plurality of independent sessions (10) includes the first session (10) attended by a multicast terminal (5) and a second session (10), and the method comprises the steps of:
attending the first session (10) and the second session (10);
receiving data transmitted from the multicast terminal (5) in the first session (10);
acquiring talk right in the second session (10); and
transmitting the data in the second session (10).

25. The program storage medium of claim 17, wherein a first session (10) is established by a first session server and a second session (10) is established by a second session server, said method comprising the steps of:
attending the first session (10) and the second session (10);
transmitting an address of the second session server to the first session server as a first voice reception address of the session liaison, said first voice reception address being for receiving voice data in the first session (10); and
transmitting an address of the first session server to the second session server as a second voice reception address of the session liaison, said second voice reception address being for receiving voice data in the second session (10).

## Patentansprüche

1. Sitzungsverbindungssystem zum Verbinden einer Vielzahl von unabhängigen Sitzungen (10), um an die Vielzahl von unabhängigen Sitzungen (10) Daten zu multicasten, die von einem Multicast-Terminal (5) gesendet werden, wobei die Vielzahl von unabhängigen Sitzungen (10) eine erste Sitzung (10) enthält, welches Sitzungsverbindungssystem umfasst:
einen Verbindungsserver (3) zum Einrichten einer Verbindungssitzung (12) zum Verbinden der Vielzahl von unabhängigen Sitzungen (10), an welcher Verbindungssitzung (12) das Multicast-Terminal (5) teilnimmt;
einen Sitzungsverbund (4) zum
Teilnehmen an der Verbindungssitzung (12) und der ersten Sitzung (10),
Empfangen der Daten, die von dem Multicast-Terminal (5) bei der Verbindungssitzung (12) gesendet werden,
Erlangen des Rederechtes bei der ersten Sitzung (10) und
Multicasten der Daten an die Vielzahl von unabhängigen Sitzungen (10), die die erste Sitzung (10) enthalten; und
einen Verbundmanager (6) zum Steuern des Sitzungsverbundes (4), um an der Verbindungssitzung (12) und der ersten Sitzung (10) teilzunehmen.

2. Sitzungsverbindungssystem nach Anspruch 1, welches System so konfiguriert ist, dass:
die erste Sitzung (10) durch einen Server der ersten Sitzung eingerichtet wird,
das Multicast-Terminal (5) betriebsfähig ist, um erste Sprachdaten an den Verbindungsserver (3) zu senden,
der Verbindungsserver (3) betriebsfähig ist, um die ersten Sprachdaten an die Beteiligten der Verbindungssitzung (12) zu multicasten, wobei die Beteiligten der Verbindungssitzung (12) den Sitzungsverbund (4) enthalten,
der Sitzungsverbund (4) betriebsfähig ist, um die ersten Sprachdaten an den Server der ersten Sitzung zu senden, und
der Server der ersten Sitzung betriebsfähig ist, um die ersten Sprachdaten an Beteiligte der ersten Sitzung (10) zu multicasten.

3. Sitzungsverbindungssystem nach Anspruch 2, welches System so konfiguriert ist, dass:
an der ersten Sitzung (10) ein Terminal der ersten Sitzung teilnimmt,
das Terminal der ersten Sitzung betriebsfähig ist, um zweite Sprachdaten an den Server der ersten Sitzung zu senden,
der Server der ersten Sitzung betriebsfähig ist, um die zweiten Sprachdaten an die Beteiligten der ersten Sitzung (10) zu senden, welche Beteiligten der ersten Sitzung (10) den Sitzungsverbund (4) enthalten,
der Sitzungsverbund (4) betriebsfähig ist, um die zweiten Sprachdaten an den Verbindungsserver (3) zu senden, und
der Verbindungsserver betriebsfähig ist, um die zweiten Sprachdaten an die Beteiligten der Verbindungssitzung (12) zu multicasten.

4. Sitzungsverbindungssystem nach Anspruch 3,
bei dem der Sitzungsverbund (4) einen Datenspeicher zum Speichern von Mediensendeinformationen enthält, die angeben, ob die zweiten Sprachdaten an den Verbindungsserver (3) zu senden sind oder nicht,
und der Sitzungsverbund (4) betriebsfähig ist, um die zweiten Sprachdaten auf der Basis der Mediensendeinformationen an den Verbindungsserver (3) zu senden.

5. Sitzungsverbindungssystem nach einem vorhergehenden Anspruch,
bei dem der Sitzungsverbund (4) einen Datenspeicher zum Speichern von Mitgliedserfassungsinformationen enthält, die angeben, ob Mitgliedsinformationen bei der ersten Sitzung (10) zu senden sind oder nicht, welche Mitgliedsinformationen einen Beteiligten der Verbindungssitzung (12) betreffen,
der Sitzungsverbund (4) betriebsfähig ist, um die Mitgliedsinformationen auf der Basis der Mitgliedserfassungsinformationen bei der ersten Sitzung (10) zu senden.

6. Sitzungsverbundverbindungssystem nach Anspruch 1, bei dem die Vielzahl von unabhängigen Sitzungen (10) die erste Sitzung (10), an der das Multicast-Terminal (5) teilnimmt, und eine zweite Sitzung (10) enthält, welcher Sitzungsverbund (4) umfasst:
einen Sitzungsteilnehmer zum Teilnehmen an der ersten Sitzung (10) und der zweiten Sitzung (10);
einen Datenempfänger zum Empfangen von Daten, die von dem Multicast-Terminal (5) bei der ersten Sitzung gesendet werden;
ein Mittel zum Erlangen des Rederechtes bei der zweiten Sitzung (10); und
einen Datensender zum Senden der Daten bei der zweiten Sitzung (10).

7. Sitzungsverbundverbindungssystem nach Anspruch 1, bei dem der Verbundmanager (6) betriebsfähig ist, um den Sitzungsverbund (4) zu verwalten, zum Verbinden einer ersten Sitzung (10), die durch einen Server der ersten Sitzung eingerichtet wird, und einer zweiten Sitzung (10), die durch einen Server der zweiten Sitzung eingerichtet wird, welcher Verbundmanager (6) umfasst:
einen Verbindungsanforderungsempfänger zum Empfangen, von dem Server der ersten Sitzung, einer Verbindungsanforderung, die Informationen über den Server der zweiten Sitzung enthält; und
einen Verbundcontroller zum Steuern des Sitzungsverbundes, um an der ersten Sitzung (10) und der zweiten Sitzung (10) teilzunehmen.

8. Sitzungsverbindungsverfahren, das durch ein Sitzungsverbindungssystem ausgeführt wird, welches Sitzungsverbindungssystem eine Vielzahl von unabhängigen Sitzungen (10) verbindet, um an die Vielzahl von unabhängigen Sitzungen (10) erste Daten zu multicasten, die von einem Multicast-Terminal (5) gesendet werden, wobei die Vielzahl von unabhängigen Sitzungen (10) eine erste Sitzung (10) enthält und das Sitzungsverbindungssystem einen Datenspeicher zum Speichern eines Sitzungsidentifikators zum Identifizieren der ersten Sitzung (10) enthält, welches Sitzungsverbindungsverfahren die Schritte umfasst:
Empfangen einer Verbindungsanforderung, die den Sitzungsidentifikator enthält, von dem Multicast-Terminal (5);
Registrieren des Sitzungsidcntifikators in dem Datenspeicher;
Einrichten einer Verbindungssitzung (12) zum Verbinden der Vielzahl von unabhängigen Sitzungen (10), welche Verbindungssitzung durch das Multicast-Terminal (5) begleitet wird;
Teilnehmen an der ersten Sitzung (10), die durch den Sitzmogsidentifikator identifiziert wird;
Empfangen der ersten Daten von dem Multicast-Terminal (5) bei der Verbindungssitzung (12);
Erlangen des Rederechtes bei der ersten Sitzung (10); und
Multicasten der ersten Daten an die Vielzahl von unabhängigen Sitzungen (10), die die erste Sitzung (10) enthalten.

9. Sitzungsverbindungsverfahren nach Anspruch 8, welches Sitzungsverbindungsverfahren ferner die Schritte umfasst:
Empfangen von zweiten Daten bei der ersten Sitzung (10); und
Senden der zweiten Daten bei der Verbindungssitzung (12).

10. Sitzungsverbindungsverfahren nach Anspruch 9,
bei dem der Datenspeicher Mediensendeinformationen speichert, die angeben, ob die zweiten Daten bei der Verbindungssitzung (12) zu senden sind oder nicht,
und der Schritt zum Senden der zweiten Daten bei der Verbindungssitzung (12) auf der Basis der Mediensendeinformationen ausgeführt wird.

11. Sitzungsverbindungsverfahren nach einem der Ansprüche 8 bis 10, bei dem der Datenspeicher Mitgliedserfassungsinformationen speichert, die angeben, ob Mitgliedsinformationen bei der ersten Sitzung (10) zu senden sind oder nicht, wobei die Mitgliedsinformationen einen Beteiligten des Sitzungsverbundes (12) betreffen, welches Sitzungsverbindungsverfahren ferner den Schritt enthält:
Senden der Mitgliedsinformationen bei der ersten Sitzung (10) auf der Basis der Mitgliedserfassungsinformationen.

12. Sitzungsverbindungsverfahren nach einem der Ansprüche 8 bis 11,
bei dem der Schritt zum Teilnehmen an der ersten Sitzung (10) nach der Ausführung des Schrittes zum Einrichten einer Verbindungssitzung (12) ausgeführt wird.

13. Sitzungsverbindungsverfahren nach einem der Ansprüche 8 bis 12,
bei dem der Schritt zum Teilnehmen an der ersten Sitzung (10) nach der Ausführung des Schrittes zum Registrieren des Sitzungsidentifikators ausgeführt wird.

14. Sitzungsverbindungsverfahren nach einem der Ansprüche 8 bis 13,
bei dem die ersten Daten Sprachdaten sind.

15. Sitzungsverbindungsverfahren nach Anspruch 8, bei dem die Vielzahl von unabhängigen Sitzungen (10) die erste Sitzung (10), an der das Multicast-Terminal (5) teilnimmt, und eine zweite Sitzung (10) enthält und das Verfahren die Schritte umfasst:
Teilnehmen an der ersten Sitzung (10) und der zweiten Sitzung (10);
Empfangen von Daten, die von dem Multicast-Terminal (5) bei der ersten Sitzung (10) gesendet werden;
Erlangen des Rederechtes bei der zweiten Sitzung (10); und
Senden der Daten bei der zweiten Sitzung (10).

16. Sitzungsverbindungsverfahren nach Anspruch 8, bei dem eine erste Sitzung (10) durch einen Server der ersten Sitzung eingerichtet wird und eine zweite Sitzung (10) durch einen Server der zweiten Sitzung eingerichtet wird, welches Verfahren die Schritte umfasst:
Teilnehmen an der ersten Sitzung (10) und der zweiten Sitzung (10);
Senden einer Adresse des Servers der zweiten Sitzung an den Server der ersten Sitzung als erste Sprachempfangsadresse des Sitzungsverbundes, welche erste Sprachempfangsadresse zum Empfangen von Sprachdaten bei der ersten Sitzung (10) dient; und
Senden einer Adresse des Servers der ersten Sitzung an den Server der zweiten Sitzung als zweite Sprachempfangsadresse des Sitzungsverbundes, welche zweite Sprachempfangsadresse zum Empfangen von Sprachdaten bei der zweiten Sitzung (10) dient.

17. Programmspeichermedium, das durch einen Computer lesbar ist, welches Programmspeichermedium ein Programm von Instruktionen für den Computer speichert, um ein Sitzungsverbindungsverfahren auszuführen, wobei der Computer in einem Sitzungsverbindungssystem enthalten ist, das Sitzungsverbindungssystem eine Vielzahl von unabhängigen Sitzungen (10) verbindet, um an die Vielzahl von unabhängigen Sitzungen (10) erste Daten zu multicasten, die von einem Multicast-Terminal (5) gesendet werden, die Vielzahl von unabhängigen Sitzungen (10) eine erste Sitzung (10) enthält und der Computer einen Datenspeicher zum Speichern eines Sitzungsidentifikators zum Identifizieren der ersten Sitzung (10) enthält, welches Sitzungsverbindungsverfahren die Schritte umfasst:
Empfangen einer Verbindungsanforderung, die den Sitzungsidcntifikator enthält, von dem Multicast-Terminal (5);
Registrieren des Sitzungsidentifikators in dem Datenspeicher;
Einrichten einer Verbindungssitzung (12) zum Verbinden der Vielzahl von unabhängigen Sitzungen (10), welche Verbindungssitzung (12) durch das Multicast-Terminal (5) begleitet wird;
Teilnehmen an der ersten Sitzung (10), die durch den Sitzungsidentifikator identifiziert wird;
Empfangen der ersten Daten von dem Multicast-Terminal (5) bei der Verbindungssitzung (12);
Erlangen des Rederechtes bei der ersten Sitzung (10); und
Multicasten der ersten Daten an die Vielzahl von unabhängigen Sitzungen (10), die die erste Sitzung (10) enthalten.

18. Programmspeichermedium nach Anspruch 17, bei dem das Sitzungsverbindungsverfahren ferner die Schritte umfasst:
Empfangen von zweiten Daten bei der ersten Sitzung (10); und
Senden der zweiten Daten bei der Verbindungssitzung (12).

19. Programmspeichermedium nach Anspruch 18,
bei dem der Datenspeicher Mediensendeinformationen speichert, die angeben, ob die zweiten Daten bei der Verbindungssitzung (12) zu senden sind oder nicht,
und der Schritt zum Senden der zweiten Daten bei der Verbindungssitzung (12) auf der Basis der Mediensendeinformationen ausgeführt wird.

20. Programmspeichermedium nach einem der Ansprüche 17 bis 19, bei dem der Datenspeicher Mitgliedserfassungsinformationen speichert, die angeben, ob Mitgliedsinformationen bei der ersten Sitzung (10) zu senden sind oder nicht, welche Mitgliedsinformationen einen Beteiligten der Verbindungssitzung (12) betreffen, wobei das Sitzungsverbindungsverfahren ferner den Schritt umfasst:
Senden der Mitgliedsinformationen bei der ersten Sitzung (10) auf der Basis der Mitgliedserfassungsinformationen.

21. Programmspeichermedium nach einem der Ansprüche 17 bis 20,
bei dem der Schritt zum Teilnehmen an der ersten Sitzung (10) nach der Ausführung des Schrittes zum Einrichten einer Verbindungssitzung (12) ausgeführt wird.

22. Programmspeichermedium nach einem der Ansprüche 17 bis 21,
bei dem der Schritt zum Teilnehmen an der ersten Sitzung (10) nach der Ausführung des Schrittes zum Registrieren des Sitzungsidentifikators ausgeführt wird.

23. Programmspeichermedium nach einem der Ansprüche 17 bis 22,
bei dem die ersten Daten Sprachdaten sind.

24. Programmspeichermedium nach Anspruch 17, bei dem die Vielzahl von unabhängigen Sitzungen (10) die erste Sitzung (10), an der das Multicast-Terminal (5) teilnimmt, und eine zweite Sitzung (10) enthält und das Verfahren die Schritte umfasst:
Teilnehmen an der ersten Sitzung (10) und der zweiten Sitzung (10);
Empfangen von Daten, die von dem Multicast-Terminal (5) bei der ersten Sitzung (10) gesendet werden;
Erlangen des Rederechtes bei der zweiten Sitzung (10); und
Senden der Daten bei der zweiten Sitzung (10).

25. Programmspeichermedium nach Anspruch 17, bei dem eine erste Sitzung (10) durch einen Server der ersten Sitzung eingerichtet wird und eine zweite Sitzung (10) durch einen Server der zweiten Sitzung eingerichtet wird und das Verfahren die Schritte umfasst:
Teilnehmen an der ersten Sitzung (10) und der zweiten Sitzung (10);
Senden einer Adresse des Servers der zweiten Sitzung an den Server der ersten Sitzung als erste Sprachempfangsadresse des Sitzungsverbundes, welche erste Sprachempfangsadresse zum Empfangen von Sprachdaten bei der ersten Sitzung (10) dient; und
Senden einer Adresse des Servers der ersten Sitzung an den Server der zweiten Sitzung als zweite Sprachempfangsadresse des Sitzungsverbundes, welche zweite Sprachempfangsadresse zum Empfangen von Sprachdaten bei der zweiten Sitzung (10) dient.

## Revendications

1. Système de lien entre sessions destiné à lier une pluralité de sessions indépendantes (10) de façon à multidiffuser vers la pluralité de sessions indépendantes (10) des données émises par un terminal (5) de multidiffusion, ladite pluralité de sessions indépendantes (10) incluant une première session (10), ledit système de lien entre sessions comprenant :
un serveur (3) de lien destiné à établir une session (12) de lien pour lier la pluralité de sessions indépendantes (10), ladite session (12) de lien ayant comme participant le terminal (5) de multidiffusion ;
une liaison (4) entre sessions destinée :
à participer à la session (12) de lien et à la première session (10) ;
à recevoir les données émises par le terminal (5) de multidiffusion dans la session (12) de lien ;
à acquérir un droit de parole dans la première session (10) ; et
à multidiffuser les données à la pluralité de sessions indépendantes (10) incluant la première session (10) ; et
un gestionnaire (6) de liaison destiné à commander la liaison (4) entre sessions pour participer à la session (12) de lien et à la première session (10).

2. Système de lien entre sessions selon la revendication 1, lequel système est constitué de façon que :
ladite première session (10) est établie par un premier serveur de session ;
ledit terminal (5) de multidiffusion est utilisable pour transmettre des premières données vocales au serveur (3) de lien ;
le serveur (3) de lien est utilisable pour multidiffuser les premières données vocales aux participants de la session (12) de lien, lesdits participants de la session (12) de lien incluant la liaison (4) entre sessions ;
ladite liaison (4) entre sessions est utilisable pour transmettre les premières données vocales au premier serveur de session ; et
ledit premier serveur de session est utilisable pour multidiffuser les premières données vocales aux participants de la première session (10).

3. Système de lien entre sessions selon la revendication 2, lequel système est constitué de façon que :
ladite première session (10) a comme participant un premier terminal de session ;
ledit premier terminal de session est utilisable pour transmettre des secondes données vocales au premier serveur de session ;
ledit premier serveur de session est utilisable pour multidiffuser les secondes données vocales aux participants de la première session (10), lesdits participants de la première session (10) incluant la liaison (4) entre sessions ;
ladite liaison (4) entre sessions est utilisable pour transmettre les secondes données vocales au serveur (3) de lien ; et
ledit serveur de lien est utilisable pour multidiffuser les secondes données vocales aux participants de la session (12) de lien.

4. Système de lien entre sessions selon la revendication 3,
ladite liaison (4) entre sessions incluant une mémoire de données destinée à mémoriser de l'information d'émission multimédia indiquant si les secondes données vocales doivent ou non être transmises au serveur (3) de lien,
ladite liaison (4) entre sessions étant utilisable pour transmettre les secondes données vocales au serveur (3) de lien sur la base de l'information d'émission multimédia.

5. Système de lien entre sessions selon l'une quelconque des revendications précédentes,
ladite liaison (4) entre sessions incluant une mémoire de données destinée à mémoriser de l'information d'acquisition de membre indiquant si l'information de membre doit ou non être émise dans la première session (10), ladite information de membre étant d'un participant à la session (12) de lien,
ladite liaison (4) entre sessions étant utilisable pour émettre l'information de membre dans la première session (10) sur la base de l'information d'acquisition de membre.

6. Système de lien entre sessions selon la revendication 1, dans lequel la pluralité de sessions indépendantes (10) comprend la première session (10) à laquelle participe le terminal (5) de multidiffusion et une seconde session (10), la liaison (4) entre sessions comprenant :
un abonné de sessions pour participer à la première session (10) et à la seconde session (10) ;
un récepteur de données destiner à recevoir des données émises par le terminal (5) de multidiffusion dans la première session (10) ;
un moyen destiné à acquérir un droit de parole dans la seconde session (10) ; et
un émetteur de données destiné à émettre les données dans la seconde session (10).

7. Système de lien entre sessions selon la revendication 1, dans lequel ledit gestionnaire (6) de liaison est utilisable pour gérer ladite liaison (4) entre sessions pour lier une première session (10) établie par un premier serveur de session et une seconde session (10) établie par un second serveur de session, ledit gestionnaire (6) de liaison comprenant :
un récepteur de demande de lien destiné à recevoir du premier serveur de session une demande de lien incluant de l'information du second serveur de session ; et
un régisseur de liaison destiné à commander la liaison entre sessions pour participer à la première session (10) et à la seconde session (10).

8. Procédé de lien entre sessions mis en oeuvre par un système de lien entre sessions, ledit système de lien entre sessions liant une pluralité de sessions indépendantes (10) de façon à multidiffuser à la pluralité de sessions indépendantes (10) des premières données émises par un terminal (5) de multidiffusion, ladite pluralité de sessions indépendantes (10) incluant une première session (10), ledit système de lien entre sessions incluant une mémoire de données destinée à mémoriser un identificateur de session destiné à identifier la première session (10), ledit procédé de lien entre sessions comprenant les étapes consistant :
à recevoir, du terminal (5) de multidiffusion, une demande de lien incluant l'identificateur de session ;
à enregistrer l'identificateur de session dans la mémoire de données ;
à établir une session (12) de lien destinée à lier la pluralité de sessions indépendantes (10), ladite session (12) de lien ayant comme participant le terminal (5) de multidiffusion ;
à participer à la première session (10) identifiée par l'identificateur de session ;
à recevoir, du terminal (5) de multidiffusion, les premières données dans la session (12) de lien ;
à acquérir un droit de parole dans la première session (10) ; et
à multidiffuser les premières données à la pluralité de sessions indépendantes (10) incluant la première session (10).

9. Procédé de lien entre sessions selon la revendication 8, ledit procédé de lien entre sessions comprenant en outre les étapes consistant :
à recevoir des secondes données dans la première session (10) ; et
à émettre les secondes données dans la session (12) de lien.

10. Procédé de lien entre sessions selon la revendication 9,
ladite mémoire de données mémorisant de l'information d'émission multimédia indiquant si les secondes données doivent ou non être émises dans la session (12) de lien,
ladite étape d'émission des secondes données dans la session (12) de lien étant effectuée sur la base de l'information d'émission multimédia.

11. Procédé de lien entre sessions selon l'une quelconque des revendications 8 à 10, ladite mémoire de données mémorisant de l'information d'acquisition de membre indiquant si une information de membre doit ou non être émise dans la première session (10), ladite information de membre étant d'un participant dans la session (12) de lien, ledit procédé de lien entre sessions incluant en outre l'étape consistant :
à émettre l'information de membre dans la première session (10) sur la base de l'information d'acquisition de membre.

12. Procédé de lien entre sessions selon l'une quelconque des revendications 8 à 11, ladite étape de participation à la première session (10) étant effectuée après l'exécution de l'étape d'établissement d'une session (12) de lien.

13. Procédé de lien entre sessions selon l'une quelconque des revendications 8 à 12, ladite étape de participation à la première session (10) étant effectuée après l'exécution de l'étape d'enregistrement de l'identificateur de session.

14. Procédé de lien entre sessions selon l'une quelconque des revendications 8 à 13, lesdites premières données étant des données vocales.

15. Procédé de lien entre sessions selon la revendication 8, dans lequel ladite pluralité de sessions indépendantes (10) inclut la première session (10) ayant comme participant le terminal (5) de multidiffusion et une seconde session (10), et dans lequel le procédé comprend les étapes consistant :
à participer à la première session (10) et à la seconde session (10) ;
à recevoir des données émises par le terminal (5) de multidiffusion dans la première session (10) ;
à acquérir un droit de parole dans la seconde session (10) ; et
à émettre les données dans la seconde session (10).

16. Procédé de lien entre sessions selon la revendication 8, dans lequel la première session (10) est établie par un premier serveur de session et une seconde session (10) est établie par un second serveur de session, ledit procédé comprenant les étapes consistant :
à participer à la première session (10) et à la seconde session (10) ;
à transmettre l'adresse du second serveur de session au premier serveur de session en tant que première adresse de réception vocale de la liaison entre sessions, ladite première adresse de réception vocale étant destinée à recevoir des données vocales dans la première session (10) ; et
à transmettre l'adresse du premier serveur de session au second serveur de session en tant que seconde adresse de réception vocale de la liaison entre sessions, ladite seconde adresse de réception vocale étant destinée à recevoir des données vocales dans la seconde session (10).

17. Support de mémorisation de programme lisible par un processeur, ledit support de mémorisation de programme mémorisant un programme d'instructions pour que le processeur mette en oeuvre un procédé de lien entre sessions, ledit processeur étant inclus dans un système de lien entre sessions, ledit système de lien entre sessions liant une pluralité de sessions indépendantes (10) de façon à multidiffuser à la pluralité de sessions indépendantes (10) des premières données émises par un terminal (5) de multidiffusion, ladite pluralité de sessions indépendantes (10) incluant une première session (10), ledit processeur incluant une mémoire de données destinée à mémoriser un identificateur de session destiné à identifier la première session (10), ledit procédé de lien entre sessions comprenant les étapes consistant :
à recevoir, du terminal (5) de multidiffusion, une demande de lien incluant l'identificateur de session ;
à enregistrer l'identificateur de session dans la mémoire de données ;
à établir une session (2) de lien destinée à lier la pluralité de sessions indépendantes (10), ladite session (12) de lien ayant comme participant le terminal (5) de multidiffusion ;
à participer à la première session (10) identifiée par l'identificateur de session ;
à recevoir, du terminal (5) de multidiffusion, les premières données dans la session (12) de lien ;
à acquérir un droit de parole dans la première session (10) ; et
à multidiffuser les premières données à la pluralité de sessions indépendantes (10) incluant la première session (10).

18. Support de mémorisation de programme selon la revendication 17, ledit procédé de lien entre sessions comprenant en outre les étapes consistant :
à recevoir des secondes données dans la première session (10) ; et
à émettre les secondes données dans la session (12) de lien.

19. Support de mémorisation de programme selon la revendication 18,
ladite mémoire de données mémorisant de l'information d'émission multimédia indiquant si les secondes données doivent ou non être émises dans la session (12) de lien,
ladite étape d'émission des secondes données dans la session (12) de lien étant effectuée sur la base de l'information d'émission multimédia.

20. Support de mémorisation de programme selon l'une quelconque des revendications 17 à 19, ladite mémoire de données mémorisant de l'information d'acquisition de membre indiquant si une information de membre doit ou non être émise dans la première session (10), ladite information de membre étant d'un participant dans la session (12) de lien, ledit procédé de lien entre sessions incluant en outre l'étape consistant :
à émettre l'information de membre dans la première session (10) sur la base de l'information d'acquisition de membre.

21. Support de mémorisation de programme selon l'une quelconque des revendications 17 à 20, ladite étape de participation à la première session (10) étant effectuée après l'exécution de l'étape d'établissement d'une session (12) de lien.

22. Support de mémorisation de programme selon l'une quelconque des revendications 17 à 21, ladite étape de participation à la première session (10) étant effectuée après l'exécution de l'étape d'enregistrement de l'identificateur de session.

23. Support de mémorisation de programme selon l'une quelconque des revendications 17 à 22, lesdites premières données étant des données vocales.

24. Support de mémorisation de programme selon la revendication 17, dans lequel ladite pluralité de sessions indépendantes (10) inclut la première session (10) ayant comme participant le terminal (5) de multidiffusion et une seconde session (10), et dans lequel le procédé comprend les étapes consistant :
à participer à la première session (10) et à la seconde session (10) ;
à recevoir des données émises par le terminal (5) de multidiffusion dans la première session (10) ;
à acquérir un droit de parole dans la seconde session (10) ; et
à émettre les données dans la seconde session (10).

25. Support de mémorisation de programme selon la revendication 17, dans lequel la première session (10) est établie par un premier serveur de session et une seconde session (10) est établie par un second serveur de session, ledit procédé comprenant les étapes consistant :
à participer à la première session (10) et à la seconde session (10) ;
à transmettre l'adresse du second serveur de session au premier serveur de session en tant que première adresse de réception vocale de la liaison entre sessions, ladite première adresse de réception vocale étant destinée à recevoir des données vocales dans la première session (10) ; et
à transmettre l'adresse du premier serveur de session au second serveur de session en tant que seconde adresse de réception vocale de la liaison entre sessions, ladite seconde adresse de réception vocale étant destinée à recevoir des données vocales dans la seconde session (10).
